(19) Europäisches Patentamt
European Patent Office
Office européen des brevets

(11) EP 3 165 741 A1

(12) **EUROPEAN PATENT APPLICATION**

(43) Date of publication:
10.05.2017 Bulletin 2017/19

(51) Int Cl.:
F02C 9/34 (2006.01)          F02C 9/28 (2006.01)

(21) Application number: 16196703.9

(22) Date of filing: 01.11.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.11.2015 IN 5969CH2015

(71) Applicant: General Electric Company
Schenectady, NY 12345 (US)

(72) Inventors:
• PUNJALA, Ratna Manedhar
500081 Hyderabad, Andhra Pradesh (IN)
• KALYA, Prabhanjana
500081 Hyderabad, Andhra Pradesh (IN)
• MITCHELL, Paul Jeffrey
Greenville, SC South Carolina 29615 (US)

(74) Representative: Pöpper, Evamaria
General Electric Technology GmbH
GE Corporate Intellectual Property
Brown Boveri Strasse 7
5400 Baden (CH)

(54) **SYSTEM AND METHOD FOR DETERMINING FUEL SPLITS FOR A GAS TURBINE**

(57)     A method (300) for determining fuel splits includes monitoring (302) an airflow-related parameter of a gas turbine (100) and determining (304) first (212) and second reference values (214) for the airflow-related parameter based on a combustion reference temperature (CRT). The first reference value (212) is associated with a first load path (10) of the gas turbine (100) and the second reference value (214) is associated with a second load path (12) of the gas turbine (100). The method (300) also includes determining (310) first (252) and second fuel split commands (254) based on the combustion reference temperature (CRT). In addition, the method (300) includes determining a fuel split value (260) to be applied in association with a monitored value of the airflow-related parameter based at least in part on the reference values (212, 214) and the fuel split commands (252, 254) and applying the fuel split value (260) to regulate an amount of fuel supplied to one or more fuel circuits of the gas turbine (100).

FIG. 6

**Description**

FIELD OF THE INVENTION

The present subject matter relates generally to gas turbines and, more particularly, to a system and method for determining fuel splits for a gas turbine.

BACKGROUND OF THE INVENTION

Industrial and power generation gas turbines have turbine control systems (controllers) that monitor and control their operation. These controllers govern the combustion system of the gas turbine and other operational aspects of the turbine. Thus, the controller may execute scheduling algorithms that adjust the fuel flow, combustor fuel splits (i.e., the division of the total fuel flow into gas turbine between the various fuel circuits of the turbine), the angle of the inlet guide vanes (IGVs) and other control inputs to ensure safe and efficient operation of the gas turbine. Additionally, turbine controllers may receive input values of measured operating parameters and desired operating settings that, in conjunction with scheduling algorithms, determine settings for control parameters to achieve a desired operation. The values prescribed by scheduling algorithms for the control parameters may cause the turbine to operate at a desired state, such as at a desired output level and/or within defined emissions limits.

BRIEF DESCRIPTION OF THE INVENTION

Aspects and advantages of the present subject matter will be set forth in part in the following description, or may be obvious from the description, or may be learned through practice of the present subject matter.
In one aspect, the present subject matter is directed to a method for determining fuel splits for a gas turbine. The method may generally include monitoring, with a computing device, an airflow-related parameter of the gas turbine and determining, with the computing device, first and second reference values for the airflow-related parameter based on a combustion reference temperature of the gas turbine. The first reference value may be associated with a first load path of the gas turbine and the second reference value may be associated with a second load path of the gas turbine. The method may also include determining, with the computing device, first and second fuel split commands based on the combustion reference temperature. The first fuel split command may be associated with the first load path of the gas turbine and the second fuel split command may be associated with the second load path of the gas turbine. In addition, the method may include determining, with the computing device, a fuel split value to be applied within the gas turbine in association with a monitored value of the airflow-related parameter based at least in part on the first and second reference values and the first and second fuel commands and applying, with the computing device, the fuel split value within the gas turbine to regulate an amount of fuel supplied to one or more fuel circuits of the gas turbine.
In another aspect, the present subject matter is directed to a system for determining fuel splits for a gas turbine. The system may generally include a computing device including at least one processor and associated memory. The memory may store instructions that, when implemented by the processor(s), configure the computing device to monitor an airflow-related parameter of the gas turbine and determine first and second reference values for the airflow-related parameter based on a combustion reference temperature of the gas turbine. The first reference value may be associated with a first load path of the gas turbine and the second reference value may be associated with a second load path of the gas turbine. The computing device may also be configured to determine first and second fuel split commands based on the combustion reference temperature. The first fuel split command may be associated with the first load path of the gas turbine and the second fuel split command may be associated with the second load path of the gas turbine. In addition, the computing device may be configured to determine a fuel split value to be applied within the gas turbine in association with a monitored value of the airflow-related parameter based at least in part on the first and second reference values and the first and second fuel split commands.
These and other features, aspects and advantages of the present subject matter will become better understood with reference to the following description and appended claims. The accompanying drawings, which are incorporated in and constitute a part of this specification, illustrate embodiments of the present subject matter and, together with the description, serve to explain the principles of the present subject matter.

BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:

  FIG. 1 illustrates a plot of exhaust temperature for a gas turbine (y-axis) versus gas turbine load (x-axis), particularly illustrating the standard load paths for a gas turbine;

FIG. 2 illustrates a schematic view of one embodiment of both a gas turbine and a system for determining fuel splits for a gas turbine in accordance with aspects of the present subject matter;

FIG. 3 illustrates a simplified block diagram of one embodiment of a control algorithm that may be implemented to determine fuel splits for a gas turbine in accordance with aspects of the present subject matter;

FIG. 4 illustrates a plot of combustor airflow for a gas turbine (y-axis) versus combustion reference temperature for the gas turbine (x-axis), particularly illustrating operating curves for a gas turbine operating at differing ambient temperatures that have been corrected based on an operating condition of the gas turbine;

FIG. 5 illustrates a plot of combustor airflow for a gas turbine (y-axis) versus compressor inlet temperature for the gas turbine (x-axis), particularly illustrating operating curves for a gas turbine operating along its standard load paths that have been corrected based on an operating condition of the gas turbine; and

FIG. 6 illustrates a flow diagram of one embodiment of a method for determining fuel splits for a gas turbine in accordance with aspects of the present subject matter.

## DETAILED DESCRIPTION

Reference now will be made in detail to embodiments of the present subject matter, one or more examples of which are illustrated in the drawings. Each example is provided by way of explanation of the present subject matter, not limitation of such subject matter. In fact, it will be apparent to those skilled in the art that various modifications and variations can be made in the present subject matter without departing from the scope or spirit of the present subject matter. For instance, features illustrated or described as part of one embodiment can be used with another embodiment to yield a still further embodiment. Thus, it is intended that the present subject matter covers such modifications and variations as come within the scope of the appended claims and their equivalents.

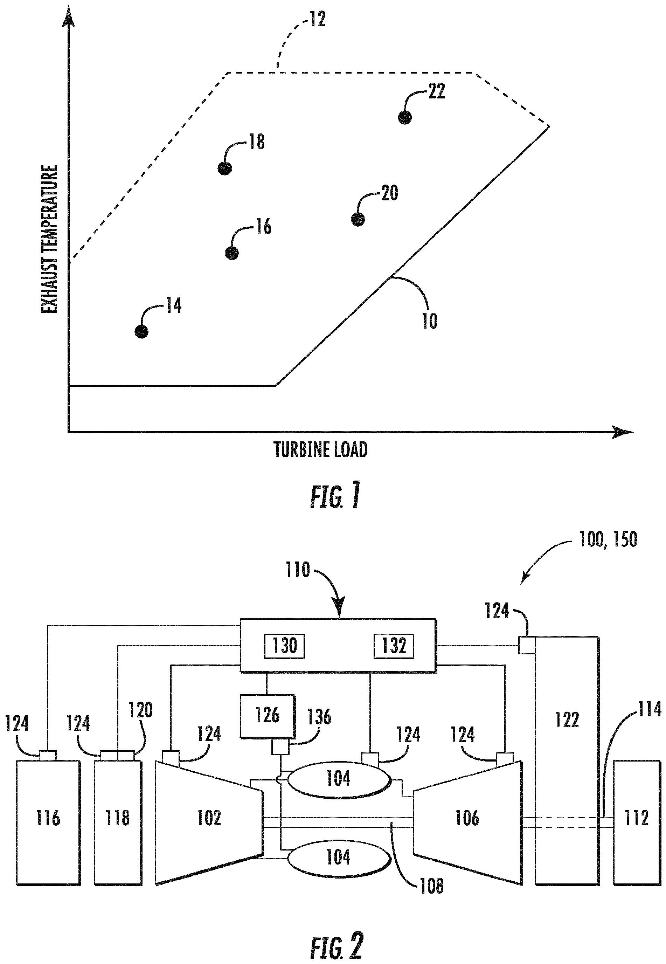

Gas turbines are typically operated along one of two standard load paths. The standard load paths are shown graphically in FIG. 1, which illustrates a plot of the exhaust temperature of a gas turbine (y-axis) versus the gas turbine load (x-axis). As shown in FIG. 1, a gas turbine may be operated along a first load path (indicated by line 10) or a second load path (indicated by line 12). The first load path 10 is often referred to as the simple cycle or cold load path and may correspond to operation at or near a maximum airflow condition for the gas turbine. Similarly, the second load path 12 is often referred to as the combined cycle or hot load path and may correspond to operation at or near a minimum airflow condition for the gas turbine. When operating along the first load path 10, the combustor fuel splits for the gas turbine are typically set according to a first nominal fuel split schedule defined for the first load path 10. Similarly, when operating along the second load path 12, the combustor fuel splits for the gas turbine are typically set according to a second nominal fuel split schedule defined for the second load path 12. Such nominal fuel split schedules are typically defined as a function of a calculated combustion reference temperature (CRT) for the gas turbine, which is related to or associated with the heat production within the combustors (and/or may be related to or associated with the gas temperature at the discharge of the combustors). As is generally known, values of CRT are calculated using various measured or calculated parameters, such as compressor discharge pressure, turbine exhaust temperature, exhaust air flow, ambient temperature and inlet guide vane angles, as inputs.

Gas turbines are now being developed that are capable of operating at any location within the operating space defined between the standard load paths. For example, turbines may be equipped to operate at any of the operating points 14, 16, 18, 20, 22 defined between first and second load paths 10, 12 shown in FIG. 1. As gas turbine operation traverses the operating space defined between the standard load paths, the individual circuit-level fuel-to-air requirements must be varied to maintain emissions compliance, avoid acoustic dynamics and/or to prevent flame out. Unfortunately, conventional fuel scheduling techniques that rely on nominal fuel splits schedules defined solely for the standard load paths are not sufficiently robust to accommodate such a wider range of turbine operation.

Thus, the present subject matter is directed to an improved system and method for determining fuel splits for a gas turbine. Specifically, in several embodiments, the present disclosure relates to a combustion control algorithm for determining fuel splits that is configured to be implemented by a controller of the gas turbine. Implementation of the control algorithm may allow fuels splits to be determined that permit a gas turbine to operate within the operating space defined between its standard load paths (e.g., the first and second load paths 10, 12 shown in FIG. 1) while maintaining emission levels, avoiding acoustic dynamics and/or preventing flame out.

As will be described below, the disclosed control algorithm is based at least in part on the discovery that certain airflow-related parameters of the gas turbine (e.g., combustor airflow) may be represented as a linear function of the combustion reference temperature (CRT) of the gas turbine. Moreover, it has been found that this linear function may be collapsed onto a single line using a correction factor determined based on one or more operating conditions for the gas turbine (e.g., ambient pressure, temperature and/or humidity). Since the nominal fuel split schedules for the standard load paths may also be defined as a function of CRT, the linear function defined between the airflow-related parameter and CRT may be used to calculate the appropriate fuel split for gas turbine operation at any location between the standard load paths. For example, in one embodiment, a linear interpolation may be performed to determine the appropriate fuel split as a function of the airflow-related parameter and CRT.

Referring to FIG. 2, a simplified, schematic view one embodiment of a gas turbine 100 is illustrated in accordance with aspects of the present subject matter. As shown in FIG. 2, the gas turbine 100 may include a compressor 102, a plurality of combustors 104, a turbine 106 drivingly coupled to the compressor 102 (e.g., via a shaft 108) and a turbine control system 110 (hereinafter referred to as the "controller 110"). In one embodiment, the combustors 104 may be part of a Dry-Low NOx (DLN) combustion system and the controller 110 may be programmed and/or modified to control the DLN combustion system. As is generally understood the turbine 106 may drive a generator 112 (e.g., via a shaft 114) so as to produce electrical power.

As shown in FIG. 2, an inlet duct 116 of the gas turbine 100 may feed ambient air and possibly injected water into the compressor 102. Additionally, a first stage of the compressor 102 may include a plurality of circumferentially arranged, cantilevered inlet guide vanes 118 (IGVs). The IGVs 118 may be coupled to an actuator 120 and may be actuated by the controller 110 to regulate the airflow flowing through the compressor 102. For example, during operation along the first load path 10 (FIG. 1) of the gas turbine 100, the IGVs 118 may be actuated to a fully open position, such as at a maximum angle of approximately 90 degrees, to allow maximum airflow through the compressor 102. Similarly, during operation along the second load path 12 (FIG. 1) of the gas turbine 100, the IGV angle may be set to a more closed position, such as at a minimum angle of about 41.5 degrees to about 43 degrees, to reduce the airflow through the compressor 102.

Moreover, as shown in FIG. 2, an exhaust duct 122 of the gas turbine 100 may configured to direct combustion gases from the outlet of the turbine 106 through, for example, emission control and/or sound absorbing devices. Alternatively, in embodiments in which the gas turbine 100 forms part of a combined cycle power generation plant, the exhaust gases may be directed through a heat recovery steam generation (HRSG) system (not shown). In such embodiments, the exhaust gases supplied to the HRSG system may, in turn, be used as a heat source for generating high-pressure, high-temperature steam. The steam may then be passed through a steam turbine (not shown) in order to generate power.

The gas turbine 100 may also include a plurality of fuel circuits configured to deliver fuel to the various fuel nozzles contained within each combustor 104. For example, in one embodiment, the gas turbine 100 may include four fuel circuits, with three fuel circuits delivering fuel to the various premix fuel nozzle assemblies of the combustors 104 (e.g., PM1, PM2 and PM3 fuel circuits) and a diffusion fuel circuit delivering fuel to various fuel nozzles via diffusion fuel passages (D5 fuel circuit). It should be appreciated, however, that the gas turbine 100 may generally include any number and type of fuel circuits depending on the configuration of the gas turbine 100 and, thus, need not have the same number and type of fuel circuits described above. Additionally, depending on the particular mode at which the gas turbine 100 is operating, it should be appreciated that fuel may not be supplied through each of the fuel circuits. For example, during part-load operation, fuel may only be delivered to the combustors 104 through the PM1, PM2 and PM3 fuel circuits.

In several embodiments, the operation of the gas turbine 100 may be monitored by a plurality of different sensors 124 configured to detect various operating parameters associated with the gas turbine 100 (including parameters associated with the ambient environment). For example, temperature sensors 124 may monitor the ambient temperature surrounding the gas turbine, the compressor inlet temperature, the compressor discharge temperature, the turbine exhaust temperature and/or other temperature measurements of the working fluid and/or combustion gases through the gas turbine 100. Similarly, pressure sensors 124 may monitor the ambient pressure and the static and dynamic pressure levels at the compressor inlet and outlet (e.g., a compressor discharge pressure), at the turbine exhaust and/or at other locations in the gas stream through the gas turbine 100. Additionally, humidity sensors 124 (e.g., wet and dry bulb thermometers) may measure the ambient humidity at the inlet duct of the compressor 102 while one or more inlet guide vane sensors 124 may monitor or identify the current angle of the IGVs 118. Moreover, one or more flow sensors 124 may provide flow measurements for the working fluid and/or the combustion gases at one or more locations along the gas turbine 100. The sensors 124 may also comprise speed sensors, flame detector sensors, valve position sensors, or the like that sense various parameters pertinent to the operation of gas turbine 100. As used herein, "parameters" refer to items that can be used to define the operating conditions of a gas turbine such as, but not limited to, temperatures, pressures, and gas flows at defined locations in the gas turbine. Some parameters may be measured since they are capable of being sensed and may be directly known. Other parameters may be estimated or calculated using the measured parameters. For example, various airflows associated with the gas turbine 100, such as the compressor inlet airflow, the combustor airflow and the exhaust airflow, may be calculated or inferred based on other measured parameters. The measured and calculated parameters may generally be used to represent a given turbine operating condition.

It should be appreciated that, as used herein, a parameter of the gas turbine 100 is "monitored" when a sensor measurement is used to directly or indirectly determine its present value. Thus, the term "monitor" and variations thereof are used to indicate that the sensors 124 need not provide a direct measurement of the operating parameter being monitored. For example, the sensors 124 may be used to generate signals relating to one or more operating parameters being monitored, which can then be utilized by the controller 110 or other suitable device to determine one or more other operating parameters of the gas turbine 100. For example, the compressor inlet flow may be estimated based on one or more pressure and temperature measurements provided by the sensors 124 (along with knowledge of the turbine geometry, such as effective areas). Similarly, the combustor airflow may be determined based on one or more other monitored operating parameters.

Referring still to FIG. 2, a fuel controller 126 may be configured to regulate the fuel flowing from a fuel supply (not shown) to each of the combustors 104. The fuel controller 126 may also select the type of fuel supplied to each of the combustors 104. Additionally, in one embodiment, the fuel controller126 may be configured to implement fuel split commands that determine the portion of fuel flowing to the various fuel circuits of the combustors 104. Generally, the fuel split commands may correspond to a fuel split percentage for each fuel circuit, which may define what percentage of the total amount of fuel delivered to the combustors 104 is supplied through a particular fuel circuit (e.g., the percentage of the total fuel flow being supplied to the PM1, PM2 and PM3 fuel circuits).

It should be appreciated that the controller 110 may generally correspond to any suitable processor based device(s) (e.g., one or more computing devices) that permits the gas turbine 100 to be controlled and/or operated as described herein. As such, the controller 110 may include one or more processor(s) 130 and associated memory device(s) 132 configured to perform a variety of computer-implemented functions (e.g., performing the methods, steps, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 132 may generally comprise memory element(s) including, but not limited to, computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) 132 may generally be configured to store suitable computer-readable instructions that, when implemented by the processor(s) 130, configure the controller 110 to perform various functions including, but not limited to, controlling the operation of the gas turbine 100 based on sensor inputs and/or instructions from human operators, determining fuel splits for regulating the fuel flow to the combustors 104 and/or the like. Similarly, control commands generated by the controller 110 may cause actuators on the gas turbine 100 to, for example: adjust valves (e.g., via actuator 136) between the fuel supply and the combustors 104 for regulating the flow, fuel splits and type of fuel flowing to the combustors 104; adjust the angle of the inlet guide vanes 118 (e.g., via actuator 120) on the compressor 102, and activate other control settings on the gas turbine 100.

It should also be appreciated that the fuel controller 126 may, in one embodiment, correspond to a component of the turbine controller 110. Alternatively, the fuel controller 126 may correspond to a separate processing unit(s) and, thus, may include one or more separate processors and associated memory. In such an embodiment, the fuel split commands being implemented to regulate the fuel splits may be generated by the fuel controller 126 or may be generated by the controller 110 and subsequently transmitted to the fuel controller 126.

As shown in FIG. 2, the present subject matter is also directed to a system 150 for determining fuel splits for a gas turbine. In general, the system 150 may include any suitable components that allow the system 150 determine fuel splits for a gas turbine in accordance with the disclosure provided herein. For example, in one embodiment, the system 150 may include the controller 110, the fuel controller 126, the sensors 124 and/or any of the other components shown in FIG. 2.

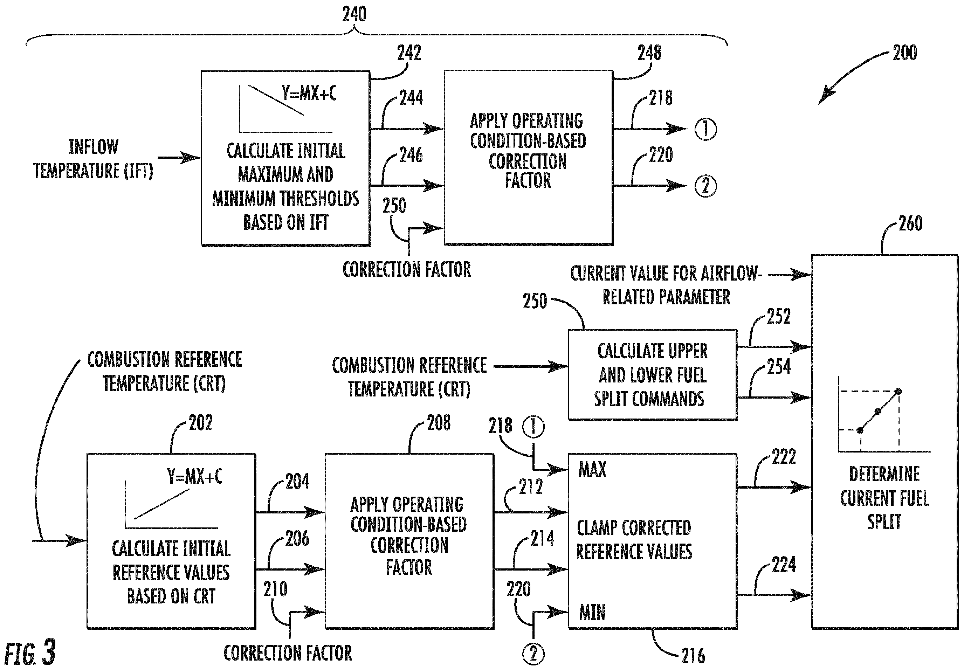

Referring now to FIG. 3, a simplified block diagram of one embodiment of a control algorithm 200 that may be implemented by a gas turbine controller to determine fuel splits for a gas turbine is illustrated in accordance with aspects of the present subject matter. For purposes of discussion, the control algorithm 200 will be described herein as being implemented by the controller 110 described above with reference to FIG. 2. However, in other embodiments, the control algorithm 200 may be implemented by any other suitable controller or computing device configured to determine fuel splits for a gas turbine.

As indicated above, the control algorithm 200 is based at least in part on the discovery that certain airflow-related parameters of the gas turbine 100 can be represented as a linear function of the combustion reference temperature (CRT) and that such linear function may be collapsed onto a single line using a correction factor based on one or more operating conditions for the gas turbine (e.g., ambient pressure, temperature and/or humidity). For purposes of discussion, the control algorithm 200 will be described with reference to the linear relationship between the combustor airflow (i.e., an airflow value indicative of the flow of air supplied to the combustors 104 of the gas turbine 100) and CRT. However, linear relationships may also be defined between CRT and other airflow-related parameters of the gas turbine 100, such as the compressor inlet airflow, the exhaust airflow and the compressor discharge pressure.

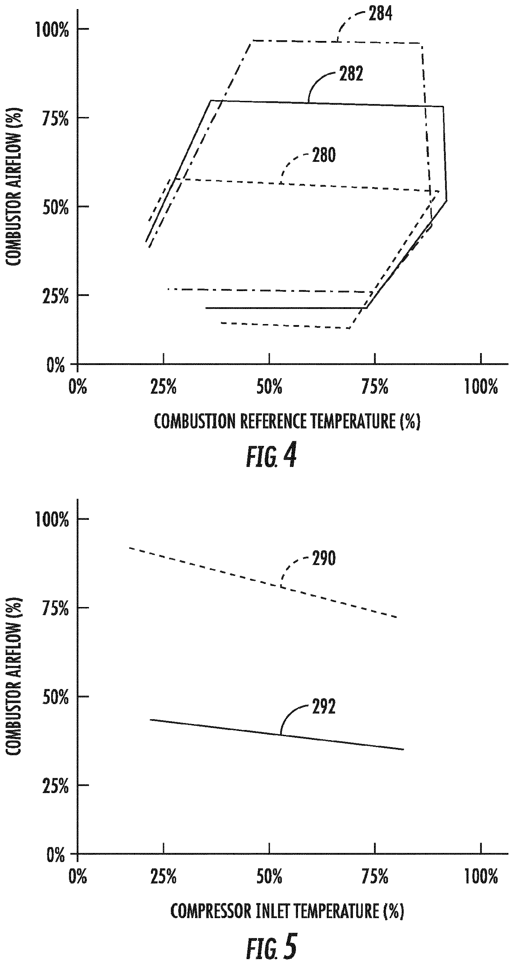

In addition, it was also observed that the minimum and maximum values associated with the airflow-related parameter vary depending on different ambient temperature conditions (or compressor inlet conditions to account for inlet conditioning and/or inlet bleed flows). For example, FIG. 4 illustrates a pressure-corrected plot of combustor airflow (y-axis) versus CRT (x-axis) at differing ambient temperature conditions. In particular, FIG. 4 plots a first operating curve (indicated by dashed line 280) indicative of gas turbine operation at a high ambient temperature (e.g., 120 degrees Fahrenheit), a second operating curve (indicated by solid line 282) indicative of gas turbine operation at the standard or isometric ambient temperature (e.g., about 59 degrees Fahrenheit) and a third operating curve (indicated by phantom line 284) indicative of gas turbine operation at a low ambient temperature (e.g., 20 degrees Fahrenheit). As shown by the relatively horizontal portions of the operating curves 280, 282, 284, the minimum and maximum airflows vary significantly based on the ambient temperature.

Based on the above discoveries/observations, it has been found that fuel splits for a gas turbine may be calculated by modeling the minimum and maximum values associated with the relevant airflow-related parameter as a linear function of ambient conditions. Specifically, in several embodiments, the disclosed control algorithm 200 may allow for the calculation of fuel splits based on four different linear functions or models determined using steady state GAS turbine models. For instance, models may be calculated that represent: 1) a linear function defined between the airflow-related parameter and CRT for the cold or first load path 10 (FIG. 1) of the gas turbine 100 during variable IGV operation; 2) a linear function defined between the airflow-related parameter and an inflow temperature for the gas turbine 100 (e.g., the ambient temperature or the compressor inlet temperature) for the cold or first load path 10 of the gas turbine 100 during operation at the maximum IGV angle; 3) a linear function defined between the airflow-related parameter and CRT for the hot or second load path 12 (FIG. 1) of the gas turbine 100 during variable IGV operation; and 4) a linear function defined between the airflow-related parameter and the inflow temperature for the hot or second load path 12 of the gas turbine 100 during operation at the minimum IGV angle. Using such models together with the nominal fuel split schedules set for the turbine's first and second load paths 10, 12 (defined as a function of CRT), the control algorithm 200 may be configured to calculate fuel splits at any operating location within the turbine's load space.

Referring particularly to FIG. 3, the control algorithm 200 may utilize CRT as an input to one or more of its control blocks. As is generally understood, the controller 110 may be configured to continuously calculate a value for CRT during operation of the gas turbine 100. Specifically, values for CRT may be calculated based on available data representing various measured operating parameters and constants of the gas turbine 100. For example, measured or calculated operating parameters, such as the compressor discharge pressure, the turbine exhaust temperature, the exhaust airflow, the ambient temperature and the inlet guide vane angle, may be used as inputs for the calculation. The mathematical model correlating such operating parameters and any other required parameters/conditions may generally be programmed into the memory 132 of the controller 110. As such, values of CRT may be calculated, in real-time, automatically and continuously by the controller 110 during operation of the gas turbine 100.

It should be readily appreciated by those of ordinary skill in the art that the development of the mathematical model for determining values of CRT generally includes the consideration of a significant number of aero-thermal, nonlinear equations correlating various operating parameters and conditions of a gas turbine. Additionally, the model may generally vary from gas turbine to gas turbine. Thus, it should be apparent to those of ordinary skill in the art that, generally, any mathematical model known in the art for determining values of CRT for a particular gas turbine 100 may be used without departing from the scope of the present subject matter.

As shown in FIG. 3, the current CRT value calculated by the controller 110 may be input into control block 202 to allow initial reference values to be determined for the airflow-related parameter. Specifically, in several embodiments, the controller 110 may be configured to calculate a first initial reference value (indicated by arrow 204) and a second initial reference value (indicated by arrow 206) for the airflow-related parameter based on the current CRT value. In accordance with aspects of the present subject matter, the first and second initial reference values 204, 206 may be calculated using differing models or functions that relate to the first and second load paths 10, 12, respectively, of the gas turbine 100.

For example, the first initial reference value 204 may generally be associated with the cold or first load path 10 of the gas turbine 100. As indicated above, a model may be developed that represents a linear function defined between the airflow-related parameter and CRT for the cold or first load path 10 during variable IGV operation. Such linear function may then be utilized to calculate the first initial reference value 204. For instance, the first initial reference value 204 may be calculated using the linear function assuming ISO day operating conditions.

Similarly, the second initial reference value 206 may generally be associated with the hot or second load path 12 of the gas turbine 100. For example, as indicated above, a model may be developed that represents a linear function defined between the airflow-related parameter and CRT for the hot or second load path 12 during variable IGV operation. Such linear function may then be utilized to calculate the second initial reference value 206. For instance, the second initial reference value 206 may be calculated using the linear function assuming ISO day operating conditions.

Additionally, as shown in FIG. 3, the first and second initial reference values 204, 206 calculated for the airflow-related parameter may be input into control block 208 to allow an operating condition-based correction factor (indicated by arrow 210) to be applied to the initial reference values 204, 206. Specifically, in several embodiments, a pressure-based correction factor 210 may be utilized to account for any pressure-based variations in the airflow-related parameter. For example, as indicated above, FIG. 4 illustrates pressure-corrected values of the combustor airflow plotted against CRT. By applying the pressure-based correction factor 210, the combustor airflow values may be collapsed onto a single operating curve at each ambient operating temperature (e.g., each curve 280, 282, 284 shown in FIG. 4) regardless of the ambient pressure and the load path along which the gas turbine 100 is being operated. In other embodiments, similar operating condition-based corrections based on the ambient temperature and/or humidity may be applied (e.g., depending on the applicable compressor/combustor configuration).

As shown in FIG. 3, first and second corrected reference values may be output from control block 208 upon application of the correction factor 210. Specifically, a first corrected reference value (indicated by arrow 212) may be output that corresponds to the first initial reference value 204 after application of the correction factor 210. Similarly, a second corrected reference value (indicated by arrow 214) may be output that corresponds to the second initial reference value 206 after application of the correction factor 210.

In several embodiments, the correction factor 210 may correspond to a multiplier that is multiplied by each of the initial reference values 204, 206 to calculate the corresponding corrected reference values 212, 214. For example, when the correction factor 210 corresponds to a pressure-based correction factor, the correction factor may be determined as a function of the current ambient pressure for the gas turbine 100 and the standard or isometric pressure value for the gas turbine 100 (e.g., 14.7 pounds per square inch). The determined correction factor may then be multiplied against each of the initial reference values 204, 206 to calculate the corresponding corrected reference values 212, 214.

As shown in FIG. 3, the corrected reference values 212, 214 output from control block 208 may then be input into control block 216, at which the reference values 212, 214 are clamped between a maximum threshold (indicated by arrow 218) and a minimum threshold (indicated by arrow 220) defined for the airflow-related parameter. Specifically, at control block 216, the first corrected reference value 212 may be compared to the maximum and minimum thresholds 218, 220 to generated a first final reference value (indicated by arrow 222) and the second corrected reference value 214 may be compared to the maximum and minimums thresholds 218, 220 to generate a second final reference value (indicated by arrow 224). In such instance, if the first and second corrected reference values 212, 214 correspond to values defined between the maximum and minimums thresholds 218, 220, the first and second final reference values 222, 224 may simply correspond to the first and second corrected reference values 212, 214, respectively. However, if the first corrected reference value 212 or the second corrected reference value 214 exceeds the maximum threshold 218, the corresponding final reference value 222, 224 may be equal to the maximum threshold 218. Similarly, if the first corrected reference value 212 or the second corrected reference value 214 is less than the minimum threshold 220, the corresponding final reference value 222, 224 may be equal to the minimum threshold 220.

As shown in FIG. 3, in one embodiment, the maximum and minimum thresholds 218, 220 may be determined using a sub-algorithm 240 of the disclosed controlled algorithm 200. Specifically, as shown in the illustrated embodiment, the sub-algorithm 240 may utilize an inflow temperature (IFT) of the gas turbine 100 as an input to control block 242. In one embodiment, the inflow temperature may correspond to the compressor inlet temperature of the gas turbine 100. In another embodiment, the inflow temperature may correspond to the ambient temperature associated with the gas turbine 100. As indicated above, such temperature(s) may be monitored using one or more temperature sensors 124 associated with the gas turbine 100.

As shown in FIG. 3, the current IFT value may be input into control block 242 to allow initial maximum and minimum thresholds to be determined for the airflow-related parameter. Specifically, in several embodiments, the controller 110 may be configured to calculate an initial maximum threshold (indicated by arrow 244) and an initial minimum threshold (indicated by arrow 246) for the airflow-related parameter based on the current IFT value. In accordance with aspects of the present subject matter, the initial maximum and minimum thresholds may be calculated using differing models or functions that relate to the first and second load paths 10, 12, respectively, of the gas turbine 100.

For example, the initial maximum threshold 244 may generally be associated with the cold or first load path 10 of the gas turbine 100. As indicated above, a model may be developed that represents a linear function defined between the airflow-related parameter and IFT for the cold or first load path 10 during operation at the maximum IGV angle. Such linear function may then be utilized to calculate the initial maximum threshold 244. For instance, the initial maximum threshold 244 may be calculated using the linear function assuming ISO day operating conditions.

Similarly, the initial minimum threshold 246 may generally be associated with the hot or second load path 12 of the gas turbine 100. For example, as indicated above, a model may be developed that represents a linear function defined between the airflow-related parameter and IFT for the hot or second load path 12 during operation at the minimum IGV angle. Such linear function may then be utilized to calculate the initial minimum threshold 246. For instance, the initial minimum threshold 246 may be calculated using the linear function assuming ISO day operating conditions.

Additionally, as shown in FIG. 3, the initial maximum and minimum thresholds 244, 246 calculated for the airflow-related parameter may then be input into control block 248 to allow an operating condition-based correction factor (indicated by arrow 250) to be applied to the threshold values 244, 246. Similar to the correction factor 210 described above, the correction factor 250 may be determined based on one or more operating conditions of the gas turbine 100, such as the ambient pressure, temperature and/or humidity for the gas turbine 100. Specifically, in one embodiment, a pressure-based correction factor 250 may be utilized to account for any pressure-based variations in the airflow-related parameter. For example, FIG. 5 illustrates pressure-corrected values of the combustor airflow (y-axis) plotted against the compressor inlet temperature of the gas turbine 100 (x-axis). As shown, by applying the pressure-based correction factor 240, the combustor airflow values may be collapsed onto a single operating curve for each load path 10, 12 regardless of the ambient pressure. Specifically, the airflow values may be collapsed onto a first operating curve (indicated by dashed line 290) for operation along the first load path 10 of the gas turbine 100 and may be collapsed onto a second operating curve (indicated by solid line 292) for operation along the second load path 12 of the gas turbine 100.

Referring back to FIG. 3, as shown, corrected maximum and minimum thresholds may be output from control block 248 upon application of the correction factor 250. Specifically, a corrected maximum threshold (indicated by arrow 218) may be output that corresponds to the initial maximum threshold 244 after application of the correction factor 250. Similarly, a corrected minimum threshold (indicated by arrow 220) may be output that corresponds to the initial minimum threshold 246 after application of the correction factor 250. As shown in FIG. 3, the corrected maximum and minimum thresholds 218, 220 may then be input into control block 216 to allow for clamping of the corrected reference values 212, 214.

Similar to the correction factor 210 described above, the correction factor 250 may, in several embodiments, correspond to a multiplier that is multiplied by each of the initial threshold values 244, 246 to calculate the corresponding corrected threshold values 218, 220. For example, when the correction factor 250 corresponds to a pressure-based correction factor, the correction factor may be determined as a function of the current ambient pressure for the gas turbine 100 and the standard or isometric pressure value for the gas turbine 100 (e.g., 14.7 pounds per square inch). The determined correction factor may then be multiplied against each of the initial threshold values 244, 246 to calculate the corresponding corrected threshold values 218, 220.

Referring still to FIG. 3, at control block 250, first and second fuel split commands may be determined based on the current CRT value calculated by the controller 110. Specifically, as indicated above, a nominal fuel split schedule may be defined for each load path 10, 12 of the gas turbine 100. As such, based on the current CRT value, a first fuel split command (indicated by arrow 252) may be determined using the nominal fuel split schedule defined for the cold or first load path 10 and a second fuel split command (indicated by arrow 254) may be determined using the nominal fuel split schedule defined for the hot or second load path 12.

As shown in FIG. 3, at control block 260, a current fuel split value for the gas turbine 100 may be determined based on the final reference values 222, 224 output from control block 216, the fuel split commands 252, 254 output from control block 250 and a current value for the airflow-related parameter. The current value for the airflow-related parameter may generally correspond to a monitored value determined by the controller 110 based on sensor measurements and/or offline/online models of the gas turbine 100. For example, when the airflow-related parameter corresponds to the combustor airflow, the compressor inlet airflow, the exhaust airflow or the compressor discharge pressure, the controller 110 may be configured to determine the current value for the airflow-related parameter based on sensor measurements provided from the sensors 124 and/or turbine models.

In several embodiments, the current fuel split value to be associated with the current value for the airflow-related parameter may be determined using a linear interpolation method based on the final reference values 222, 224 and the fuel split commands 252, 254. For example, in a particular embodiment, the fuel split value may be calculated using the following expression (equation 1):

$$FS_{current} = FS_{hot} - \left(\frac{AF_{current} - AF_{hot}}{AF_{cold} - AF_{hot}}\right) * (FS_{hot} - FS_{cold}) \qquad (1)$$

wherein, $FS_{current}$ corresponds to the current fuel split value calculated at control block 260, $FS_{hot}$ corresponds to second fuel split command 254 calculated at control block 250, $FS_{cold}$ corresponds to the first fuel split command 252 calculated at control block 250, $AF_{current}$ corresponds to the current value for the airflow-related parameter input into control block 260, $AF_{hot}$ corresponds to the second final reference value 224 output from control block 216 and $AF_{cold}$ corresponds to the first final reference value 222 output from control block 260.

It should be appreciated that, in other embodiments, any other suitable equation or function may be used to calculate the current fuel split value based on the final reference values 222, 224 and the fuel split commands 252, 254. It should also be appreciated that a current split value may be calculated at control block 260 for each of the fuel circuits of the gas turbine 100. The current split value determined for each fuel circuit may then be applied within the gas turbine 100 to regulate the amount of the total fuel flow supplied to the various fuel circuits.

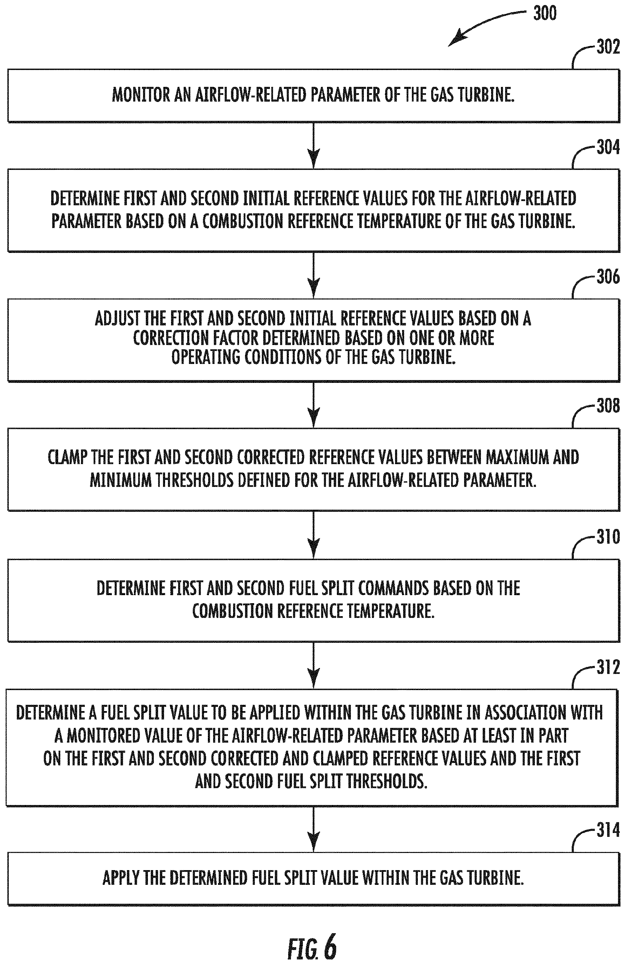

Referring now to FIG. 6, a flow diagram of one embodiment of a method 300 for determining fuel splits for a gas turbine is illustrated in accordance with aspects of the present subject matter. In general, the method 300 will be described with reference to the gas turbine 100, the system 150 and the control algorithm 200 described above with reference to FIGS. 1-3. However, it should be appreciated by those of ordinary skill in the art that the disclosed method 300 may generally be utilized to determine fuel splits for gas turbines having any other suitable turbine configuration and for systems having any other suitable system configuration. Similarly, the method 300 may be implemented using any other suitable control algorithm that is consistent with the disclosure provided herein. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 6, at (302), the method 300 may include monitoring an airflow-related parameter of the gas turbine. As indicated above, the airflow-related parameter may, in several embodiments, correspond to the combustor airflow, the compressor inlet airflow, the exhaust airflow or the compressor discharge pressure. In such embodiments, the controller 110 may be configured to monitor the airflow-related parameter based on measurements received from one or more of the sensors 124 and/or based on one or more online/offline models of the gas turbine 100. For example, as indicated above, the compressor inlet airflow may be inferred based on various sensor measurements (e.g., temperature and pressure measurements) and knowledge related to the turbine geometry.

Additionally, at (304), the method 300 may include determining first and second initial reference values for the airflow-related parameter based on a combustion reference temperature of the gas turbine. Specifically, as indicated above with reference to FIG. 3, the controller 110 may be configured (e.g., at control block 202) to calculate a first initial reference value 204 and a second initial reference value 206 for the airflow-related parameter based on the current CRT value. For example, the first initial reference value 204 may be determined using a model that represents a linear function defined between the airflow-related parameter and CRT for the cold or first load path 10 of the gas turbine 100 during variable IGV operation. Similarly, the second initial reference value 106 may be determined using a model that represents a linear function defined between the airflow-related parameter and CRT for the hot or second load path 12 of the gas turbine 100 during variable IGV operation.

Moreover, at (306), the method 300 may include adjusting the first and second initial reference values based on a correction factor determined based on one or more operating conditions of the gas turbine. For example, as indicated above, a pressure-based correction factor 210 may be utilized to account for any pressure-based variations in the airflow-related parameter. As such, by adjusting the initial reference values 204, 206 based on the pressure-based correction factor 210, the airflow-related parameter values may be collapsed onto a single operating curve at each ambient operating temperature. Alternatively, the correction factor may be determined based on any other suitable operating conditions of the gas turbine 100, such as the ambient temperature and/or humidity.

Referring still to FIG. 6, at (308), the method 300 may include clamping the first and second corrected reference values between maximum and minimum thresholds defined for the airflow-related parameter. For example, as indicated above, the controller 110 may be configured (e.g., at control block 242) to calculate an initial maximum threshold 244 and an initial minimum threshold 246 for the airflow-related parameter based on the current IFT value, such as by using a model that represents a linear function defined between the airflow-related parameter and IFT for the cold or first load path 10 of the gas turbine 100 during operation at the maximum IGV angle to calculate the initial maximum threshold 244 and by using a model that represents a linear function defined between the airflow-related parameter and IFT for the hot or second load path 12 of the gas turbine 100 during operation at the minimum IGV angle to calculate the initial minimum threshold 246. The initial threshold values 244, 246 may then be adjusted using a suitable correction factor 250 (e.g., at control block 248) to generate corrected maximum and minimum thresholds 218, 220. As shown in FIG. 3, such corrected thresholds 218, 220 may then be used (e.g., at control block 216) to clamp the first and second corrected reference values 212, 214.

Additionally, at (310), the method 300 may include determining first and second fuel split commands based on the combustion reference temperature. Specifically, as indicated above, nominal fuel split schedule may be defined for each load path 10, 12 of the gas turbine 100. As such, based on the current CRT value, the controller 110 may determine a first fuel split command 252 based on the nominal fuel split schedule defined for the cold or first load path 10 and a second fuel split command 254 based on the nominal fuel split schedule defined for the hot or second load path 12.

Moreover, at (312), the method 300 may include determining a fuel split value to be applied within the gas turbine in association with a monitored value of the airflow-related parameter based at least in part on the first and second corrected and clamped reference values and the first and second fuel split commands. For example, as indicated above, a linear interpolation method may be used to calculate the current fuel split value to be applied for the current monitored value of the airflow-related parameter based on the final reference values 222, 224 and the fuel split commands 252, 254 (e.g., using Equation 1).

Further, at (314), the method 300 may include applying the determined fuel split value within the gas turbine 100 to regulate an amount of fuel supplied to one or more fuel circuits of the gas turbine 100. For example, based on the fuel split value determined by the controller 110, a fuel split command may be generated and implemented such that a corresponding amount of the total fuel flow is supplied to the fuel circuit associated with the fuel split value.

This written description uses examples to disclose the present subject matter, including the best mode, and also to enable any person skilled in the art to practice the present subject matter, including making and using any devices or systems and performing any incorporated methods. The patentable scope of the present subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:

1. A method for determining fuel splits for a gas turbine, the method comprising:

    monitoring, with a computing device, an airflow-related parameter of the gas turbine;

    determining, with the computing device, first and second reference values for the airflow-related parameter based on a combustion reference temperature of the gas turbine, the first reference value being associated with a first load path of the gas turbine and the second reference value being associated with a second load path of the gas turbine;

    determining, with the computing device, first and second fuel split commands based on the combustion reference temperature, the first fuel split command being associated with the first load path of the gas turbine and the second fuel split command being associated with the second load path of the gas turbine;

    determining, with the computing device, a fuel split value to be applied within the gas turbine in association with a monitored value of the airflow-related parameter based at least in part on the first and second reference values and the first and second fuel split commands; and

    applying, with the computing device, the fuel split value within the gas turbine to regulate an amount of fuel supplied to one or more fuel circuits of the gas turbine.

2. The method of clause 1, wherein the airflow-related parameter corresponds to one of a combustor airflow, a compressor inlet airflow, an exhaust airflow or a compressor discharge pressure of the gas turbine.

3. The method of clause 1, wherein determining the first and second reference values for the airflow-related parameter based on the combustion reference temperature comprises:

    determining the first reference value based on a first linear function defined between the combustion reference temperature and the airflow-related parameter for the first load path of the gas turbine; and

    determining the second reference value based on a second linear function defined between the combustion reference temperature and the airflow-related parameter for the second load path of the gas turbine.

4. The method of clause 1, wherein determining the first and second reference values for the airflow-related parameter based on the combustion reference temperature of the gas turbine comprises determining first and second initial reference values for the airflow-related parameter based on the combustion reference temperature, the method further comprising:

    adjusting the first initial reference value based on a correction factor determined based on one or more operating conditions of the gas turbine to generate the first reference value; and

    adjusting the second initial reference value based on the correction factor to generate the second reference value.

5. The method of clause 4, wherein the correction factor corresponds to a pressure-based correction factor determined as a function of an ambient pressure associated with the gas turbine.

6. The method of clause 1, further comprising clamping the first and second reference values between a maximum threshold and a minimum threshold defined for the airflow-related parameter.

7. The method of clause 6, further comprising determining the maximum and minimum thresholds based on an inflow temperature of the gas turbine, the maximum threshold being associated with the first load path of the gas turbine and the minimum threshold being associated with the second load path of the gas turbine.

8. The method of clause 7, wherein determining the maximum and minimum thresholds based on the inflow temperature of the gas turbine comprises determining initial maximum and minimum thresholds based on the inflow temperature, the method further comprising:

adjusting the initial maximum threshold based on a correction factor determined based on one or more operating conditions of the gas turbine to generate the maximum threshold; and

adjusting the initial minimum threshold based on the correction factor to generate the minimum threshold.

9. The method of clause 8, wherein the correction factor corresponds to a pressure-based correction factor determined as a function of an ambient pressure associated with the gas turbine.

10. The method of clause 7, wherein the inflow temperature corresponds to an ambient temperature or a compressor inlet temperature of the gas turbine.

11. The method of clause 1, wherein determining the fuel split value to be applied within the gas turbine in association with the monitored value of the airflow-related parameter comprises determining the fuel split value based on a linear interpolation using the first and second reference values and the first and second fuel split commands.

12. The method of clause 1, wherein the first load path is associated with a maximum airflow condition for the gas turbine and the second load path is associated with a minimum airflow condition for the gas turbine.

13. A system for determining fuel splits for a gas turbine, the system comprising:

a computing device including at least one processor and associated memory, the memory storing instructions that, when implemented by the at least one processor, configure the computing device to:

monitor an airflow-related parameter of the gas turbine;

determine first and second reference values for the airflow-related parameter based on a combustion reference temperature of the gas turbine, the first reference value being associated with a first load path of the gas turbine and the second reference value being associated with a second load path of the gas turbine;

determine first and second fuel split commands based on the combustion reference temperature, the first fuel split command being associated with the first load path of the gas turbine and the second fuel split command being associated with the second load path of the gas turbine; and

determine a fuel split value to be applied within the gas turbine in association with a monitored value of the airflow-related parameter based at least in part on the first and second reference values and the first and second fuel split commands.

14. The system of clause 13, wherein the airflow-related parameter corresponds to one of a combustor airflow, a compressor inlet airflow, an exhaust airflow or a compressor discharge pressure of the gas turbine.

15. The system of clause 13, wherein the computing device is configured to determine the first reference value based on a first linear function defined between the combustion reference temperature and the airflow-related parameter for the first load path of the gas turbine and determine the second reference value based on a second linear function defined between the combustion reference temperature and the airflow-related parameter for the second load path of the gas turbine.

16. The system of clause 13, wherein the first and second reference values correspond to corrected reference values that have been adjusted based on a correction factor determined based on one or more operating conditions of the gas turbine.

17. The system of clause 13, wherein the computing device is further configured to clamp the first and second reference values between a maximum threshold and a minimum threshold defined for the airflow-related parameter, the maximum threshold being associated with the first load path of the gas turbine and the minimum threshold being associated with the second load path of the gas turbine.

18. The system of clause 17, wherein the maximum and minimum thresholds correspond to corrected threshold values that have been adjusted based on a correction factor determined based on one or more operating conditions of the gas turbine.

19. The system of clause 13, wherein the computing device is configured to determine the fuel split value based on a linear interpolation using the first and second reference values and the first and second fuel split commands.

20. The system of clause 13, wherein the first load path is associated with a maximum airflow condition for the gas turbine and the second load path is associated with a minimum airflow condition for the gas turbine.

**Claims**

1. A method (300) for determining fuel splits for a gas turbine (100),

   the method comprising:

   monitoring (302), with a computing device (110), an airflow-related parameter of the gas turbine (100);
   determining (304), with the computing device (110), first (212) and second reference values (214) for the airflow-related parameter based on a combustion reference temperature (CRT) of the gas turbine (100) the first reference value (212) being associated with a first load path (10) of the gas turbine (100) and the second reference value (214) being associated with a second load path (12) of the gas turbine (100);
   determining (310), with the computing device (110), first (252) and second fuel split commands (254) based on the combustion reference temperature (CRT), the first fuel split command (252) being associated with the first load path (10) of the gas turbine (100) and the second fuel split command (254) being associated with the second load path (12) of the gas turbine (100);
   determining (312), with the computing device (110), a fuel split value (260) to be applied within the gas turbine (100) in association with a monitored value of the airflow-related parameter based at least in part on the first (212) and second reference values (214) and the first (252) and second fuel split commands (254); and
   applying (314), with the computing device (110), the fuel split value (260) within the gas turbine (100) to regulate an amount of fuel supplied to one or more fuel circuits of the gas turbine (100).

2. The method (300) of claim 1, wherein the airflow-related parameter corresponds to one of a combustor (104) airflow, a compressor (102) inlet airflow, an exhaust airflow or a compressor (102) discharge pressure of the gas turbine (100).

3. The method (300) of claim 1, wherein determining (304) the first (212) and second reference values (214) for the airflow-related parameter based on the combustion reference temperature (CRT) comprises:

   determining (304) the first reference value (212) based on a first linear function defined between the combustion reference temperature (CRT) and the airflow-related parameter for the first load path (10) of the gas turbine (100); and
   determining (304) the second reference value (214) based on a second linear function defined between the combustion reference temperature (CRT) and the airflow-related parameter for the second load path (12) of the gas turbine (100).

4. The method (300) of claim 1, wherein determining the first (212) and second reference values (214) for the airflow-related parameter based on the combustion reference temperature (CRT) of the gas turbine (100) comprises determining first (204) and second initial reference values (206) for the airflow-related parameter based on the combustion reference temperature (CRT), the method (300) further comprising:

   adjusting (306) the first initial reference value (204) based on a correction factor (210) determined based on one or more operating conditions of the gas turbine (100) to generate the first reference value (212); and

adjusting (306) the second initial reference value (206) based on the correction factor (210) to generate the second reference value (214).

5. The method (300) of claim 4, wherein the correction factor (210) corresponds to a pressure-based correction factor determined as a function of an ambient pressure associated with the gas turbine (100).

6. The method (300) of claim 1, further comprising clamping (308) the first (212) and second reference values (214) between a maximum threshold (218) and a minimum threshold (220) defined for the airflow-related parameter.

7. The method (300) of claim 6, further comprising determining the maximum (218) and minimum thresholds (220) based on an inflow temperature (IFT) of the gas turbine (100), the maximum threshold (218) being associated with the first load path (10) of the gas turbine (100) and the minimum threshold (220) being associated with the second load path (12) of the gas turbine (100).

8. The method (300) of claim 7, wherein determining the maximum (218) and minimum thresholds (220) based on the inflow temperature (IFT) of the gas turbine (100) comprises determining initial maximum (244) and minimum thresholds (246) based on the inflow temperature (IFT), the method further comprising:

adjusting the initial maximum threshold (244) based on a correction factor (250) determined based on one or more operating conditions of the gas turbine to generate the maximum threshold (218); and
adjusting the initial minimum threshold (246) based on the correction factor (250) to generate the minimum threshold (220).

9. The method (300) of claim 8, wherein the correction factor (250) corresponds to a pressure-based correction factor determined as a function of an ambient pressure associated with the gas turbine (100).

10. The method (300) of claim 7, wherein the inflow temperature (IFT) corresponds to an ambient temperature or a compressor inlet temperature of the gas turbine (100).

11. The method (300) of claim 1, wherein determining the fuel split value (260) to be applied within the gas turbine (100) in association with the monitored value of the airflow-related parameter comprises determining the fuel split value (260) based on a linear interpolation using the first (212) and second reference values (214) and the first (252) and second fuel split commands (254).

12. A system (150) for determining fuel splits for a gas turbine (100), the system (150) comprising:

a computing device (110) including at least one processor (130) and associated memory (132), the memory (132) storing instructions that, when implemented by the at least one processor (130), configure the computing device (110) to:

monitor an airflow-related parameter of the gas turbine (100);

determine first (212) and second reference values (214) for the airflow-related parameter based on a combustion reference temperature (CRT) of the gas turbine (100), the first reference value (212) being associated with a first load path (10) of the gas turbine (100) and the second reference value (214) being associated with a second load path (12) of the gas turbine (100);
determine first (252) and second fuel split commands (254) based on the combustion reference temperature (CRT), the first fuel split command (252) being associated with the first load path (10) of the gas turbine (100) and the second fuel split command (254) being associated with the second load path (12) of the gas turbine (100); and
determine a fuel split value (260) to be applied within the gas turbine (100) in association with a monitored value of the airflow-related parameter based at least in part on the first (212) and second reference values (214) and the first (252) and second fuel split commands (254).

13. The system (150) of claim 12, wherein the computing device (110) is configured to determine the first reference value (212) based on a first linear function defined between the combustion reference temperature (CRT) and the airflow-related parameter for the first load path (10) of the gas turbine (100) and determine the second reference value (214) based on a second linear function defined between the combustion reference temperature (CRT) and the airflow-related parameter for the second load path (12) of the gas turbine (100).

14. The system (150) of claim 12, wherein the first (212) and second reference values (214) correspond to corrected reference values that have been adjusted based on a correction factor (210) determined based on one or more operating conditions of the gas turbine (100).

15. The system (150) of claim 12, wherein the computing device (110) is further configured to clamp the first (212) and second reference values (214) between a maximum threshold (218) and a minimum threshold (220) defined for the airflow-related parameter, the maximum threshold (218) being associated with the first load path (10) of the gas turbine (100) and the minimum threshold (220) being associated with the second load path (12) of the gas turbine (100).

FIG. 1

FIG. 2

FIG. 3

*FIG. 4*

*FIG. 5*

300

302

MONITOR AN AIRFLOW-RELATED PARAMETER OF THE GAS TURBINE.

304

DETERMINE FIRST AND SECOND INITIAL REFERENCE VALUES FOR THE AIRFLOW-RELATED PARAMETER BASED ON A COMBUSTION REFERENCE TEMPERATURE OF THE GAS TURBINE.

306

ADJUST THE FIRST AND SECOND INITIAL REFERENCE VALUES BASED ON A CORRECTION FACTOR DETERMINED BASED ON ONE OR MORE OPERATING CONDITIONS OF THE GAS TURBINE.

308

CLAMP THE FIRST AND SECOND CORRECTED REFERENCE VALUES BETWEEN MAXIMUM AND MINIMUM THRESHOLDS DEFINED FOR THE AIRFLOW-RELATED PARAMETER.

310

DETERMINE FIRST AND SECOND FUEL SPLIT COMMANDS BASED ON THE COMBUSTION REFERENCE TEMPERATURE.

312

DETERMINE A FUEL SPLIT VALUE TO BE APPLIED WITHIN THE GAS TURBINE IN ASSOCIATION WITH A MONITORED VALUE OF THE AIRFLOW-RELATED PARAMETER BASED AT LEAST IN PART ON THE FIRST AND SECOND CORRECTED AND CLAMPED REFERENCE VALUES AND THE FIRST AND SECOND FUEL SPLIT THRESHOLDS.

314

APPLY THE DETERMINED FUEL SPLIT VALUE WITHIN THE GAS TURBINE.

FIG. 6

Europäisches
Patentamt

European
Patent Office

Office européen
des brevets

## EUROPEAN SEARCH REPORT

Application Number

EP 16 19 6703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/192912 A1 (KALYA PRABHANJANA [IN] ET AL) 9 July 2015 (2015-07-09) * paragraph [0028] - paragraph [0031] * * paragraph [0041] - paragraph [0045]; figures 1-5 * | 1-15 | INV. F02C9/34 F02C9/28 |
| A | EP 2 423 489 A2 (GEN ELECTRIC [US]) 29 February 2012 (2012-02-29) * paragraph [0008]; figure 2 * | 1-15 | |
| A | US 2009/222187 A1 (MARTLING VINCENT C [US] ET AL) 3 September 2009 (2009-09-03) * paragraph [0020] - paragraph [0037] * | 1-15 | |

| | | |
|---|---|---|
| | | TECHNICAL FIELDS SEARCHED (IPC) |
| | | F02C F01D F02K |

The present search report has been drawn up for all claims

| Place of search | Date of completion of the search | Examiner |
|---|---|---|
| The Hague | 14 March 2017 | Robelin, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 16 19 6703

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2017

| Patent document cited in search report | | Publication date | Patent family member(s) | | Publication date |
|---|---|---|---|---|---|
| US 2015192912 | A1 | 09-07-2015 | CH | 709120 A2 | 15-07-2015 |
| | | | CN | 104763536 A | 08-07-2015 |
| | | | DE | 102015100113 A1 | 09-07-2015 |
| | | | GB | 2522997 A | 12-08-2015 |
| | | | US | 2015192912 A1 | 09-07-2015 |
| EP 2423489 | A2 | 29-02-2012 | CN | 102345515 A | 08-02-2012 |
| | | | EP | 2423489 A2 | 29-02-2012 |
| | | | JP | 2012026449 A | 09-02-2012 |
| | | | US | 2012023953 A1 | 02-02-2012 |
| US 2009222187 | A1 | 03-09-2009 | NONE | | |

EPO FORM P0459

For more details about this annex : see Official Journal of the European Patent Office, No. 12/82